# EUROPÄISCHE PATENTSCHRIFT

(11) **EP 1 100 650 B1**
(45) Veröffentlichungstag und Bekanntmachung des Hinweises auf die Patenterteilung: **22.02.2006**
(21) Anmeldenummer: 00922462.7
(22) Anmeldetag: 31.03.2000
(51) Int. Cl.: B23Q 11/00, B24B 55/10, B25F 5/00

(54) **HANDWERKZEUGMASCHINE MIT STAUBABSAUGUNG**
HAND-HELD MACHINE TOOL WITH DUST EXTRACTION
MACHINE-OUTIL A MAIN POURVUE D'UN DISPOSITIF D'ASPIRATION DE POUSSIERE

(30) Priorität: 28.05.1999 DE 19924547
(43) Veröffentlichungstag der Anmeldung: 23.05.2001
(73) Patentinhaber: ROBERT BOSCH GMBH, 70442 Stuttgart (DE)
(72) Erfinder: REICH, Doris, D-70565 Stuttgart (DE); WUENSCH, Steffen, D-71088 Holzgerlingen (DE)
(86) Internationale Anmeldenummer: PCT/DE2000/000986
(87) Internationale Veröffentlichungsnummer: WO 2000/073016

(56) Entgegenhaltungen:
- EP-A- 0 558 253
- EP-A- 0 752 240
- DE-A- 2 705 388
- DE-A- 4 438 549
- DE-A- 19 831 383

## Beschreibung

Die Erfindung geht aus von einer Handwerkzeugmaschine nach der Gattung des Anspruchs 1.

Aus der US 5,467,835 ist ein Bohrhammer mit einer Staubbox und einem dieser nachgeschalteten Gebläse bekannt, über die anfallender Bohrstaub in die Staubbox saugbar ist. Die mit dem Gebläse erzeugte Saugluft tritt im Bereich des Werkzeugs in einen Absaugkanal und wird über diesen in die Staubbox geführt. Darin passiert sie ein als Faltenfilter ausgestaltetes Staubfilter, an dem sich der Bohrstaub abscheidet und sich in der Staubbox sammelt. Die Staubbox hat einen aufklappbaren Boden zum Entnehmen des Faltenfilters und zum Entleeren des Bohrstaubs und ist mit dem Gebläse in einem gemeinsamen Gehäuse angeordnet, das mittels einer verhältnismäßig komplizierten Kupplung mit dem Bohrhammer verbindbar ist.

Die Staubbbox des bekannten Bohrhammers ist nur verhältnismäßig umständlich entleerbar, wobei der Wechsel des Faltenfilters kompliziert ist. Außerdem ist diese Staubbox ungeeignet zur freitragenden Befestigung an Handwerkzeugmaschinen mit integrierter Staubabsaugung zum Einblasen des Staubes.

Es sind auch Handwerkzeugmaschinen mit als Staubbox dienenden Kunststoffkassetten bekannt, die entweder - nach Art einer maßstäblich verkleinerten Grassammelbox für Rasenmäher - mit einer Vielzahl von Luftdurchlassöffnungen versehen und mit glattwandigem Filtermaterial ausgekleidet sind oder die aus porösem, luftdurchlässigem Kunststoff bestehen, der die staubeinblasende Luft gereinigt aus dem Behälter entlassen und den Staub darin zurückhalten soll. Diese Kunststoffkassetten neigen zum Durchlaß von Feinstaub bzw. zum Verstopfen und sind umständlich zu entleeren und zu reinigen.

### Vorteile der Erfindung

Die erfindungsgemäße Handwerkzeugmaschine mit Staubabsaugung mit den Merkmalen des Anspruchs 1 hat demgegenüber den Vorteil, daß eine sehr leichte und robuste Staubbox geschaffen worden ist, die eine besonders große Filterfläche mit hoher Luftdurchlässigkeit und besserer Feinstaubfilterung besitzt. Außerdem ist die Staubbox dadurch, daß sie mehrere Deckel hat, bequemer bzw. umweltfreundlicher entleerbar als Staubboxen mit nur einem Deckel.

Dadurch, daß der mindestens eine Deckel schubladenartig mit den Seitenwänden der Staubbox gekoppelt ist, kann die Staubbox besonders feinfühlig geöffnet werden, so daß der Staub nicht ungewollt aufgewirbelt oder verschüttet werden kann.

Dadurch, daß die Staubbox als skelettartiger Körper ausgestaltet ist und daß deren Wände als staubdicht schließende, lösbar einsetzbare Deckel ausgestaltet sind, die Luftaustrittsöffnungen sowie einen Faltenfilter tragen, ist die Luftdurchlässigkeit bei gesicherter Staubfilterung weiter verbessert, wobei beliebige Filterflächen unabhängig voneinander reinigbar bzw. austauschbar sind.

Dadurch, daß mindestens einer der Deckel mittels Scharnier mit der Staubbox gekoppelt ist, kann er, ähnlich wie bei der schubladenartigen Ausgestaltung, kontrolliert und gefühlvoll geöffnet werden. Dadurch ist ein ungewolltes Verschütten von Staub auszuschließen.

Dadurch, daß die Filterlamellen des Faltenfilters quer zur Längsachse der Staubbox angeordnet sind, ist die einströmende, staubhaltige Luft so beeinflußbar, daß eine verhältnismäßig geringe Verwirbelung und damit eine hohe Absaugleistung am bearbeiteten Werkstück gesichert ist.

Dadurch, daß quer zur Längsachse der Staubbox von den Seitenwänden bzw. von mindestens einem der Deckel getragene Staubleitstege angeordnet sind, wird der Verwirbelung der eingeblasenen, staubhaltigen Luft weiter entgegengewirkt, so daß der Wirkungsgrad der Absaugung verbessert wird.

Dadurch, daß eine der Seitenwände bzw. der Unterteil der Staubbox zumindest bereichsweise durchsichtig ist, ist der Füllstand der Staubbox quasi wie mit einem Sichtfenster optisch überwachbar.

Dadurch, daß nur jeweils die Deckel ein Filter, insbesondere Faltenfilter, tragen und als einziger Teil der Staubbox mit Luftdurchtrittsöffnungen versehen sind, ist die Filterfläche besonders groß dimensionierbar. Dadurch ist der Rückstau der staubtransportierenden Luft nur gering und der Wirkungsgrad der Staubabsaugung hoch. Außerdem kann sich dadurch der Staub ab einer bestimmten Schichtdicke selbsttätig vom Faltenfilter lösen und der Schwerkraft folgend in die Staubbox fallen, aus der er leicht enleerbar ist.

Dadurch, daß die den Deckel tragende Fläche der Staubbox gegenüber der einströmenden Luft derart geneigt ist, daß sich die Staubbox zur Maschine hin keilförmig verjüngt, sind stauminimiert Strömungsverhältnisse geschaffen, durch die der Staubabtransport weiter verbessert wird.

Dadurch, daß der Deckel sich elastisch und dicht an der Staubbox festhält, ist sie besonders einfach zu öffnen bzw. leicht wieder sicher verschließbar.

Dadurch, daß im Eintrittsstutzen der Staubbox Dichtlippen angeordnet sind, die den Staubausblasstutzen der Handwerkzeugmaschine dichtend umgreifen, ist die Staubbox mit der Handwerkzeugmaschine zuverlässig staubdicht gekoppelt.

Dadurch, daß der Faltenfilter in deckelartigen Teilen der Staubbox angeordnet ist, ist er besonders leicht auswechselbar, indem er entweder neu eingeklebt wird oder der gesamte Deckel mitsamt dem Filter ausgetauscht wird.

Dadurch, daß die Staubbox mit Arretiermitteln an der Handwerkzeugmaschine befestigbar ist, ist ihre Entnahme und Entleerung bzw. erneute Befestigung besonders bequem, sicher und zeitsparend möglich.

Dadurch, daß der Eintrittsstutzen der Staubbox mittels Ventil verschließbar ist, ist beim Lösen der Staubbox von der Handwerkzeugmaschine ein ungewolltes Austreten von Staub wirksam verhinderbar.

### Zeichnung

Nachstehend ist die Erfindung an Hand einer zugehörigen Zeichnung erläutert.

### Es zeigen

Fig. 1 einen Teillängsschnitt der erfindungsgemäßen Handwerkzeugmaschine mit Staubbox,
Fig. 2 eine Draufsicht gemäß Fig. 1,
Fig. 3 einen räumlichen Längsschnitt eines weiteren Ausführungsbeispiels der Staubbox mit zwei Deckeln,
Fig. 4 einen Querschnitt eines weiteren Ausführungsbeispiels einer Staubbox mit Schubladendeckel,
Fig. 5 ein weiteres Ausführungsbeispiel einer Staubbox, deren Seitenwände als Filterfläche dienen,
Fig. 6 eine Draufsicht einer Staubbox mit Deckel, die über ein Längsscharnier miteinander gekoppelt sind,
Fig. 7 eine Draufsicht einer Staubbox mit Deckel, die über ein Querscharnier miteinander gekoppelt sind,
Fig. 8 eine Unteransicht eines Staubboxdeckels mit parallel zur Längsachse verlaufenden Filterlamellen,
Fig. 9 eine Unteransicht eines Staubboxdeckels mit quer zur Längsachse verlaufenden Filterlamellen,
Fig. 10 eine Staubbox mit elastischer Ventilklappe,
Fig. 11 eine Staubbox mit starrer Ventilklappe,
Fig. 12 einen Staubboxdeckel mit Staubleitsteg und
Fig. 13 eine Staubbox mit zwei inneren Staubleitstegen.

### Beschreibung des Ausführungsbeispiels

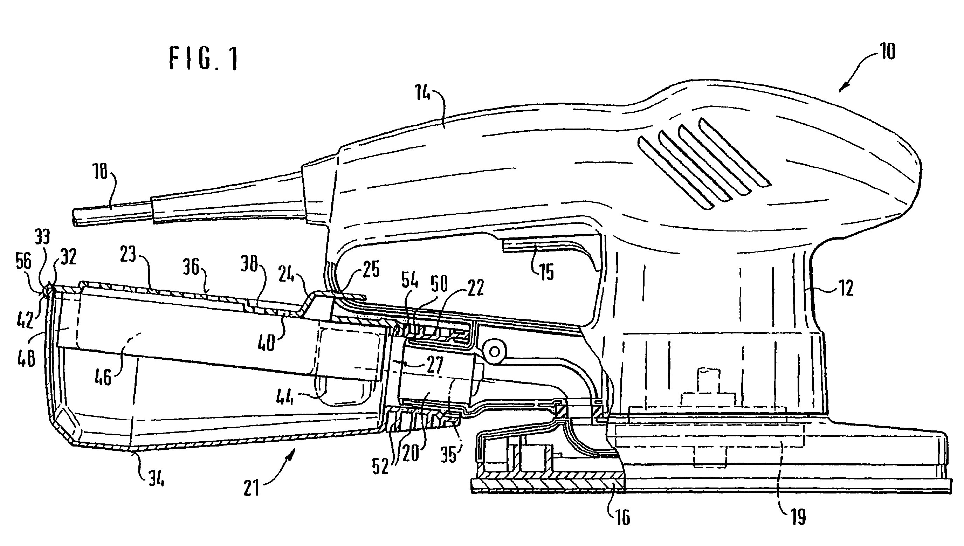

Figur 1 zeigt den Längsschnitt einer als Schwingschleifer ausgestalteten Handwerkzeugmaschine 10 mit einem Gehäuse 12, das einen Handgriff 14 mit Schalter 15 aufweist, an dem unten ein als Schleifplatte mit Durchtrittsöffnungen ausgestaltetes Werkzeug 16 bewegbar befestigt ist. Die Handwerkzeugmaschine 10 trägt am hinteren Ende des Handgriffs 14 eine elektrische Anschlußleitung 18 und im Inneren des Gehäuses 12 ein Lüfterrad 19. Dieses erzeugt beim Betrieb der Handwerkzeugmaschine über der Schleifplatte 16 bzw. zwischen der Schleifplatte 16 und einem Werkstück einen Unterdruck. Dadurch wird beim Betreiben der Handwerkzeugmaschine 10 Schleifstaub durch die Durchtrittsöffnungen der Schleifplatte 16 gesaugt und durch einen Ausblasstutzen 20 des Gehäuses 12 in eine Staubbox 21 - über deren Einblasstutzen 22 - geblasen.

Der Ausblasstutzen 20 trägt den Einblasstutzen 22 der formsteifen, freitragenden Staubbox 21. Diese ist - bis auf die Einblasöffnung 27 des Einblasstutzens 22 und ihre Oberseite - luftdicht.

Die Oberseite 36 der Staubbox 21 wird durch einen Deckel 23 gebildet. Dieser trägt einen nach oben ragenden Haken 24 zum Eingriff in eine Halteöffnung 25 des Gehäuses 12 im hinteren Bereich des Handgriffs 14. Mit dem Haken 24 hält sich die Staubbox 21 zusätzlich am Gehäuse 12 der Handwerkzeugmaschine 10 fest, so daß die Staubbox 21 besonders dünne Wandquerschnitte hat und daher besonders leicht ist.

Der Deckel 23 hält sich federelastisch überrastend mit seinem Schnapprand 42 kraft- und formschlüssig dicht an der Oberkante 32 der Staubbox 21 fest, weil diese einen umlaufenden Wulst 33 bildet, der mit einem Übermaß in den Schnapprand 42 paßt.

Die Unterseite 34 der Staubbox 21 verläuft gegenüber der Achse 35 des Einblasstutzens 22 geneigt, so daß die Staubbox 21 im Längsschnitt eine keilförmige Kontur hat, die sich zur Handwerkzeugmaschine 10 hin verjüngt. Die Oberseite 36 des Deckels 23 trägt viele, regelmäßig verteilte runde Luftdurchtrittslöcher 40, denen auf der Innenseite des Deckels 23 ein als Faltenfilter ausgestaltetes Filterelement 48 aus Spezialpapier vorgeschaltet ist. Die Außenseite 49 (Fig. 9) des Filterelements 48 ist der Innenseite des Deckels 23 zugewandt. Außerdem ist die Oberseite 36 des Deckels 23 im Bereich des Hakens 24 mit einem in die Staubbox 21 gerichteten Einzug 38 mit u-förmig verlaufender Kontur versehen. Dieser versteift die Struktur des Deckels 23 und schafft Freiraum zum Eintritt größerer Gehäusekonturen, falls andere als die Handwerkzeugmaschine 10 mit der Staubbox 21 kombiniert werden.

Die Staubbox 21 trägt auf gegenüberliegenden Seiten in ihrem vorderen Bereich nahe dem Einblasstutzen 22 zwei gewölbte Einzüge 44, die bis am Wulst 33 enden und Griffmulden zum Untergreifen des Deckels 23 durch die Finger des Bedienenden bilden und das Öffnen der Staubbox 21 erleichtern.

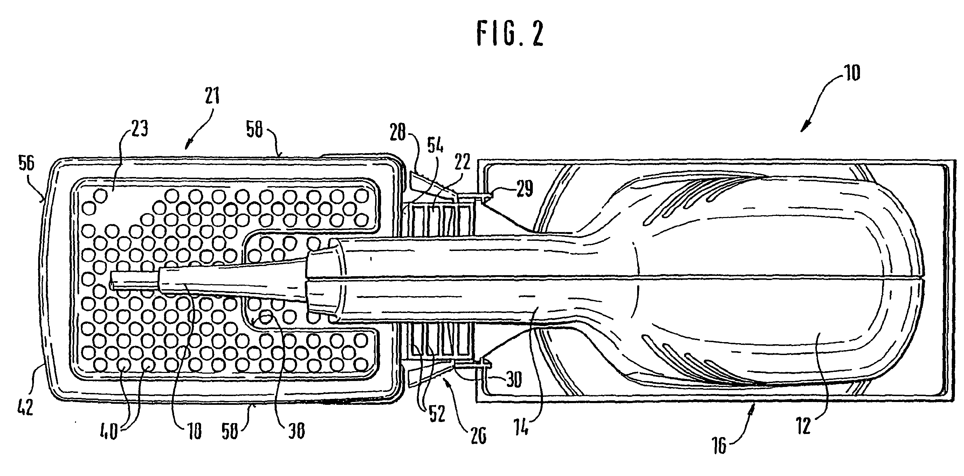

Der Deckel 23 trägt einstückig zwei parallel zu den Seitenkanten 58 bzw. quer zur Vorder- und Hinterkante 54, 56 (Fig. 2) der Staubbox 21 verlaufende Seitenlamellen 46, die kielartig in das Innere der Staubbox 21 hineinragen, dadurch als seitliche Begrenzung und mechanischer Schutz des Filterelements 48 Stoß und Druck aufnehmen, falls dieses gemeinsam mit dem Deckel 23 von der Staubbox 21 genommen um den am Filterelement 48 haftenden Staub abzuklopfen.

Der Einblasstutzen 22 der Staubbox 21 weist im Inneren eine umlaufende, elastische Dichtlippe 50 auf, die das Ende des Ausblasstutzens 20 der Handwerkzeugmaschine 10 luftdicht umschließt. Außerdem trägt der Einblasstutzen 22 der Staubbox 21 oben und unten äußere Rippen 52, die die Steifigkeit der Einheit aus Staubbox 21 und Einblasstutzen 22 verbessern.

Figur 2 zeigt die Draufsicht der Handwerkzeugmaschine 10 mit der Staubbox 21 gemäß Figur 1, wobei nicht nochmals auf alle Einzelheiten bezug genommen werden soll. Deutlich sind der Einzug 38 des Deckels 23, die Löcher 40 zum Durchtritt der vom Staub gereinigten Ausblasluft nach außen und eine Wippe 26 zum überrastenden Befestigen der Staubbox 21 an der Handwerkzeugmaschine 10 erkennbar. Die Wippe 26 der Staubbox 21 ist als zweiarmiger Hebel ausgestaltet, dessen einer Arm als Tastenarm 28 und dessen anderer Arm als Rastenarm 29 ausgestaltet ist. Die Wippe 26 ist mittels eines Filmscharniers 30 schwenkbar am Einblasstutzen 22 der Staubbox 21 befestigt, wobei sich der Rastarm 29 an einem nicht näher bezeichneten seitlichen Vorsprung des Gehäuses 12 nahe dem Ausblasstutzen 20 festhält. Der Vorsprung ist so dimensioniert, daß der Rastarm 29 dabei elastisch vorgespannt ist.

Deutlich wird auch, daß die Grundfläche des Handwerkzeugs 10 durch die rechteckige Schleifplatte 16 gebildet wird, und daß die Hinterkante 56 der Staubbox 21 bzw. des Deckels 23 nach außen gewölbt ist.

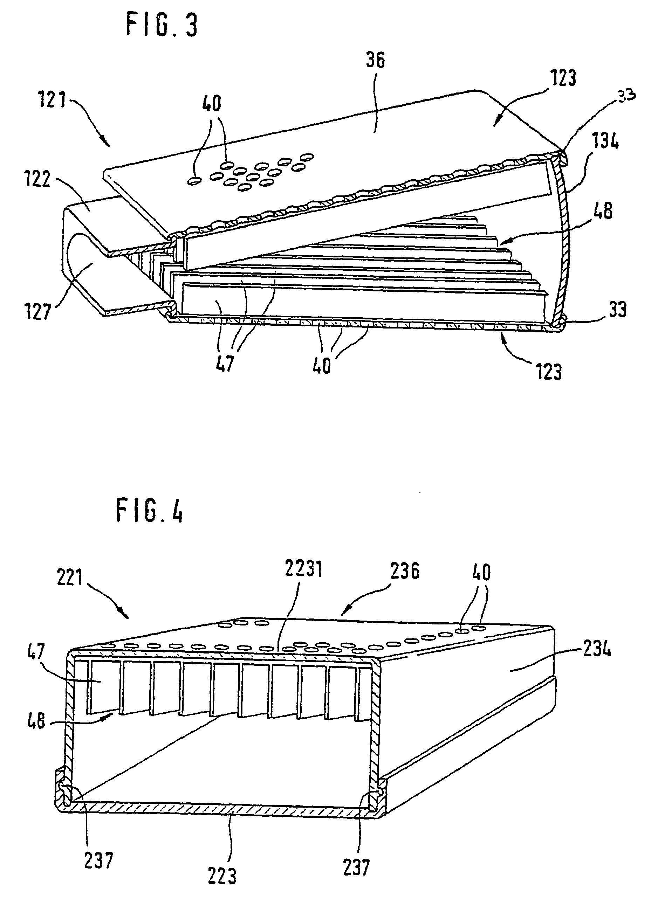

Figur 3 zeigt einen räumlichen Längsschnitt eines weiteren Ausführungsbeispiels einer Staubbox 121. An deren Staubabsaugstutzen 122 mit einer Einblasöffnung 27 schließen sich hinten, vorn und an den Seiten die Seitenwände 134 an, die quasi einen rechteckigen breiten Ring bilden, der an der Oberseite 36 und unten je einen umlaufenden Wulst 33 trägt und dort mit je einem Deckel 123 dicht verschließbar ist. Die Deckel 123 tragen dabei je ein Filterelement 48 mit rippenartigen Lamellen 47 aus Papier und haben Luftdurchtrittsöffnungen 40.

Figur 4 zeigt - spiegelbildlich zum Ausführungsbeispiel gemäß Figur 1 und 2 - einen räumlichen Querschnitt eines anderen Ausführungsbeispiels einer Staubbox 221. Deren oberer Teil 2231 hat einen U-förmigen Querschnitt und trägt an seiner Oberseite 236 Luftdurchtrittsöffnungen 40. Unten umgreift ein in Längsführungselementen 237 schubladenartig verschiebbarer, u-förmiger luft- und staubdichter Deckel 223 das obere Teil 2231 an zwei gegenüberliegenden Seiten. Das obere Teil 2231 trägt auf seiner Innenseite ein Filterelement 48 mit Längsfalten 47. Durch Verschieben des Deckels 223 gegenüber dem Oberteil kann eingeblasener Schleifstaub kontrolliert durch die beim Verschieben entstehende Öffnung geleert werden. Damit ist dessen ungewolltes Verschütten verhinderbar.

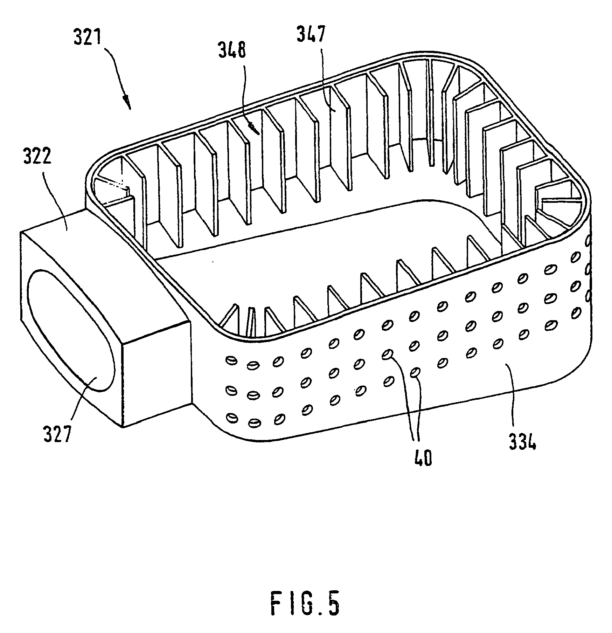

Figur 5 zeigt eine räumliche Draufsicht eines weiteren Ausführungsbeispiels einer Staubbox 321. Deren Seitenflächen 334 bilden einen breiten, gerundeten, rechteckigen Ring, der vorn einen Einsaugstutzen 322 mit seiner Einblasöffnung 327 trägt, wobei die Seitenflächen 334 mehrere, regelmäßig verteilt angeordnete Luftdurchtrittsöffnungen 40 aufweisen und innen - mit Ausnahme der den Einsaugstutzen 322 tragenden Seite - mit einem umlaufenden Filterelement 348 mit Lamellen 347 versehen ist. Die Ober- und Unterseite der Staubbox 321 ist mit nicht dargestellten Deckeln verschließbar, die luftdicht sein können oder mit Luftdurchtrittsöffnungen und Filterelementen versehen sein können und damit die Luftdurchlässigkeit der Staubbox 321 weiter erhöhen, so daß damit die Staubabsaugung einer mit einer solchen Staubbox bestückten Handwerkzeugmaschine deutlich verbessert wird.

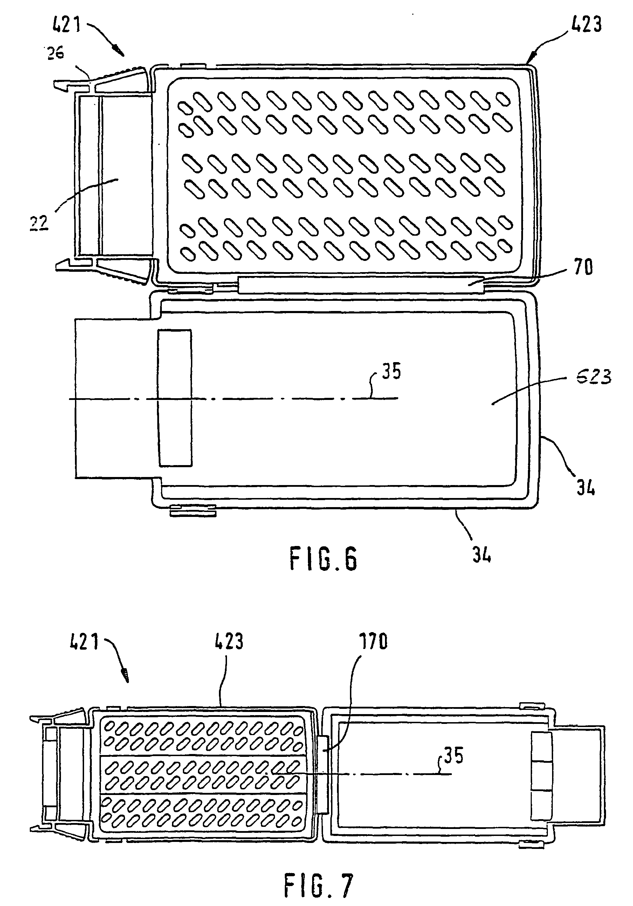

Figur 6 zeigt eine Draufsicht eines weiteren Ausführungsbeispiels einer Staubbox 421, deren Deckel 423 den Einblasstutzen 22 und die Wippen 26 trägt und über ein parallel zur Längsachse 35 der Staubbox 421 verlaufendes Scharnier 70 klappbar mit dem die Seitenwände 34 tragenden Unterteil 623 der Staubbox 421 verbunden ist.

Figur 7 zeigt prinzipiell die gleiche Staubbox, wobei hier der Deckel 423 mit dem die Seitenwände 34 tragenden Unterteil über ein quer zur Längsachse verlaufendes Scharnier 170 gekuppelt ist. Durch die Kupplung des Deckels 423 über ein Scharnier 170 mit der übrigen Staubbox 421 ist ein feinfühliges, kontrolliertes Abnehmen des Deckels 423 von der Staubbox 421 möglich, so daß ein ungewolltes Entleeren von Staub ausgeschlossen werden kann.

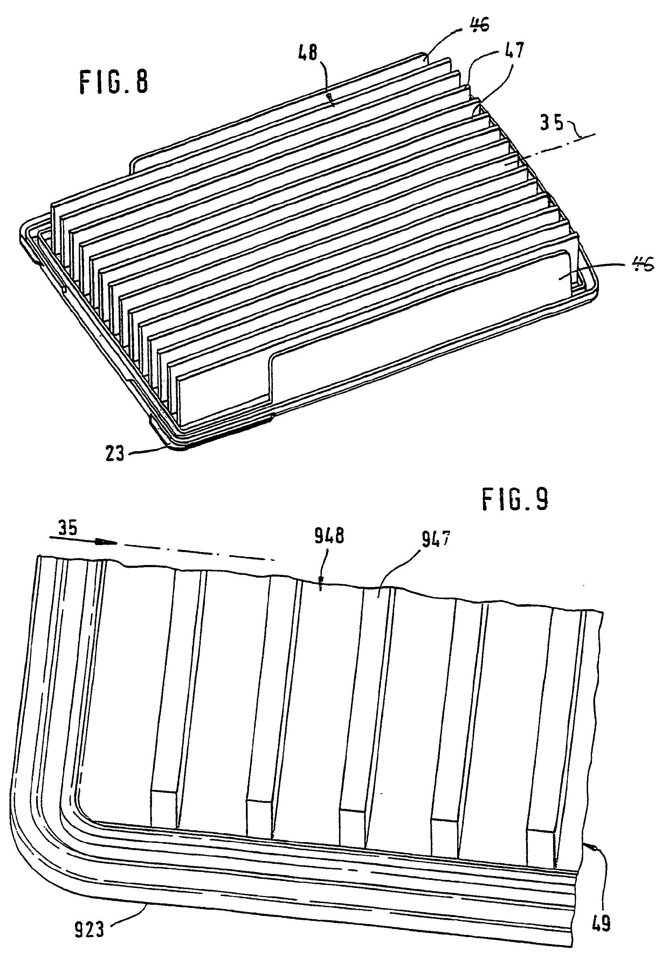

Figur 8 zeigt eine Unteransicht des zur Staubbox 21 gemäß Figur 1 gehörenden Deckels 23 mit dem Filterelement 48, dessen rippenartigen Lamellen 47 parallel zur Längsachse 35 verlaufen.

Figur 9 zeigt eine Unteransicht eines Deckels 923, der grundsätzlich dem Deckel gemäß Figur 8 entspricht, der jedoch ein Filterelement 948 trägt, das so angeordnet ist, daß dessen rippenartigen Lamellen 947 quer zur Längsachse 35 der Staubbox verlaufen.

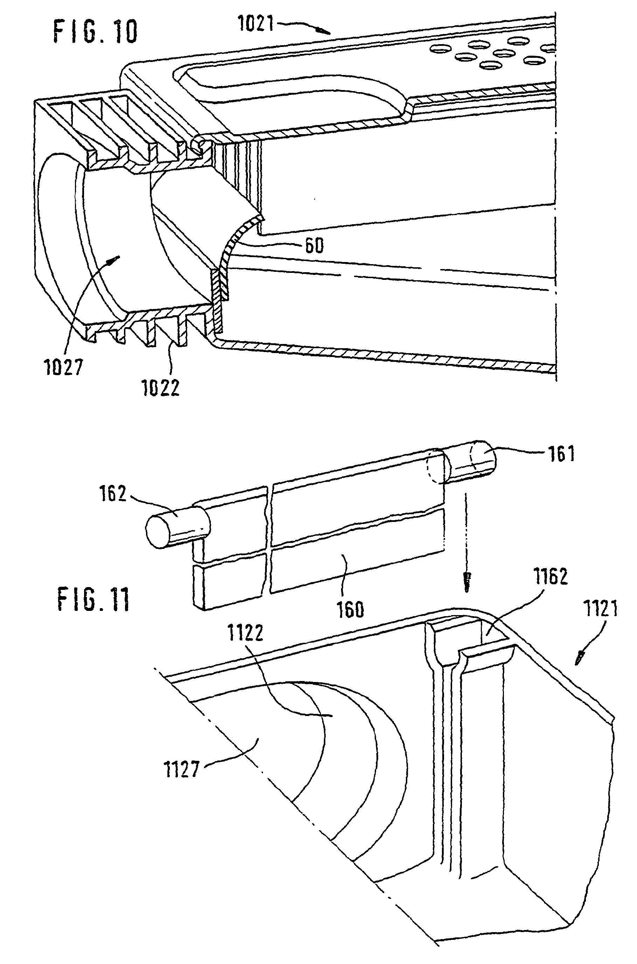

Figur 10 zeigt einen Teillängsschnitt eines weiteren Ausführungsbeispiels einer Staubbox 1021 im Bereich ihres Einblasstutzens 1022 mit einem Ventil 60, das als flattervintilartige, bi-elastische Klappe ausgestaltet ist, und das sich darstellungsgemäß unter dem Druck der einströmenden Luft nach innen umbiegt.

In dem Augenblick, in dem der Einblasluftstrom unterbrochen wird, d.h. für den Fall daß auch bei laufender Maschine die Staubbox 1021 vom Ausblasstutzen 20 der Handwerkzeugmaschine 10 abgezogen wird bzw. in dem Moment da der Motor der Handwerkzeugmaschine 10 ausgeschaltet wird, biegt sich das Ventil 60 gegen die innere Stirnfläche des Einblasstutzen 22 zurück und verschließt dessen Einblasöffnung 1027. Dadurch ist die Gefahr ungewollten Leerens der Staubbox 1021 erheblich verringert.

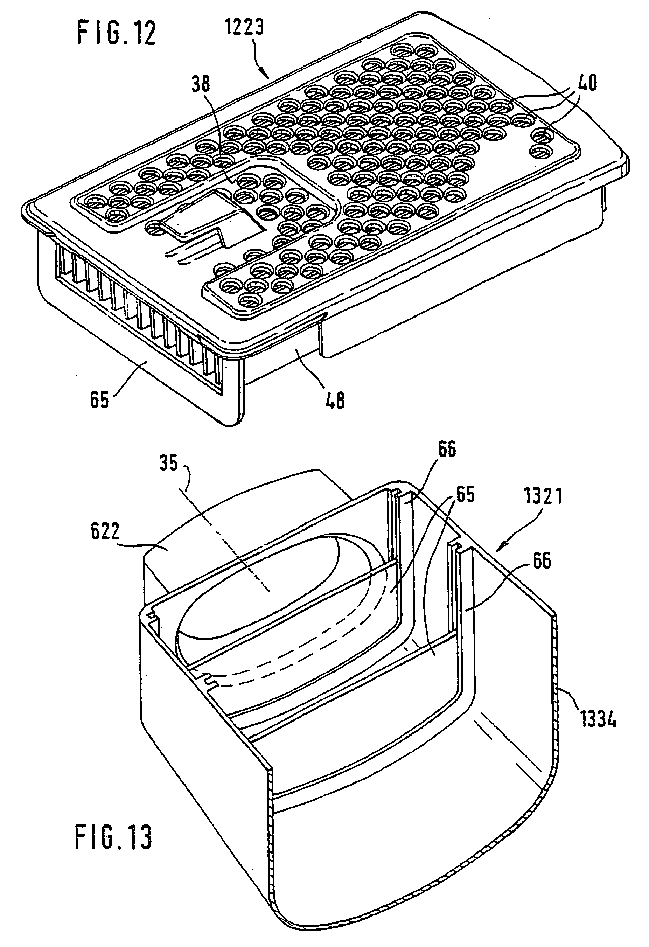

Figur 11 zeigt eine ausschnittsweise Draufsicht auf den Bereich des Einblasstutzens 1122 der Staubbox 1121. Dort ist die Einblasöffnung 1127 durch eine starre Ventilklappe 160 verschließbar, wobei die Ventilklappe 160 mit beidseitigen Achsstutzen 161 in lagerbockartige Schwenklagerschalen 1162 einhängbar ist und schwerkraftbetätigt in entsprechenden Schwenkpositionen der Staubbox 1121 bei ausgeschaltetem Motor der Handwerkzeugmaschine 10 bzw. nach Abnehmen der Staubbox 1121 von der Handwerkzeugmaschine die Einblasöffnung 1127 verschließt.

Figur 12 zeigt eine räumliche Darstellung eines Deckels 1223, der prinzipiell den Deckeln gemäß den Figuren 1, 2 und 8 entspricht. Auf dessen Oberseite sind die Luftdurchtrittsöffnungen 40 erkennbar und auf deren Gegenseite ist innen das Filterelement 48 angeordnet.

In seinem der Einblasöffnung 27 der Staubbox 21 zugeordneten Bereich trägt der Deckel 1223 einen Staubleitsteg 65, der eingeblasenen Förderluftstrom beruhigt und so leitet, daß Verwirbelungen in der mit dem Deckel 1223 bestückten Staubbox 21 vermindert sind bzw. ganz unterbleiben. Damit wird ein Zusetzen des Filterelements 48 durch aufgewühlten Staub vermindert und der Wirkungsgrad der Staubabsaugung der Handwerkzeugmaschine 10 deutlich verbessert.

Fig. 13 zeigt einen unteren Bereich einer Staubbox 1321 mit den Seitenwänden 1334, in die quer zur Längsachse 35 der Staubbox 1321 hintereinander mehrere lamellenförmige Staubleitstege 65 eingeschoben werden, die in U-profilförmigen Führungen 66 verschiebesicher gehalten werden. Die Staubleitstege 65 haben die gleiche Funktion wie der im Deckel gemäß Fig. 12. Durch diese werden aber überdies schottartige Bereiche in der Staubbox 1321 gebildet, in der eingeblasener Schleifstaub so festgehalten wird, so daß er sich beim Bewegen der Staubbox 1321 nicht ungewollt über deren Länge hin und her verlagern kann.

Dadurch, daß nicht nur der obere Deckel als luftdurchlässiges Filter dient, sondern auch weitere Flächen der Staubbox miteinbezogen werden, kann die Staubbox wesentlich kleiner ausgeführt werden als mit nur einem einzigen Deckel.

Durch Anordnung des Filterelements mit den Falten quer zur Einblasrichtung wird eine Verwirbelung bei hohen Förderleistungen des Staubförderlüfters erheblich verringert und das Füllvolumen bzw. die Effizienz des Staubabsaugens verbessert. Statt eines Faltenfilters aus Zellulose oder Kunststoff können in allen Fällen auch andere Materialien wie z.B. Vlies eingesetzt werden.

Durch die Staubleitstege werden unkontrollierte Staubverwirbelungen verhindert, die zum frühen Verstopfen des Filtermediums führen können. Dadurch wird der Staub stetig entlang der Längsachse der Staubbox bis zur hinteren Seitenwand gefördert, wobei die Absaugung quasi bis zum 100%-igen Füllen der Staubbox funktioniert.

Die Steifigkeit des Membranwerkstoffes des Ventils ist so bemessen, daß ein Staudruck im Förderluftstrom des Lüfters 19 von mindestens 0,3 Bar ausreicht, um die Klappe zu öffnen.

## Patentansprüche

1. Handwerkzeugmaschine (10) mit in ihrem Gehäuse (12) integrierter Staubabsaugung (19) und mit einem der Staubabsaugung (19) nachgeschalteten Ausblasstutzen (20), an dem lösbar mit ihrem Einblasstutzen (22) eine staubdichte Staubbox (21) befestigt ist, **dadurch gekennzeichnet,**
**dass** mehrere Seitenwände (34) der Staubbox (21) Luftaustrittsöffnungen (40) aufweisen und innen mindestens ein die Luftaustrittsöffnungen (40) überdeckendes staubdichtes Filterelement (48), insbesondere Faltenfilter, tragen, wobei die Staubbox (21) ein, insbesondere flacher, Kasten ist,
dessen Seitenwände (34) durch zumindest einen lösbaren, mit Luftaustrittsöffnungen (40) versehenen Deckel (23) gebildet wird, der auf seiner Innenseite die staubdichten Filterelemente (48) trägt.

2. Handwerkzeugmaschine nach Anspruch 1, **dadurch gekennzeichnet, daß** die Staubbox (121) auf gegenüberliegenden Seiten, insbesondere der Ober- und Unterseite, je einen Deckel (23) trägt.

3. Handwerkzeugmaschine nach einem der vorhergehenden Ansprüche, **dadurch gekennzeichnet, daß** ein Deckel (23) schubladenartig ausziehbar mit den Seitenwänden (34) der Staubbox (121) gekoppelt ist.

4. Handwerkzeugmaschine nach einem der vorhergehenden Ansprüche, **dadurch gekennzeichnet, daß** zur Oberseite senkrechten Seitenwände (334) der Staubbox (321) ringartig ineinander übergehen und, insbesondere regelmäßig angeordnete, Luftaustrittsöffnungen (40) aufweisen, die innen von einem Filterelement (48) abgedeckt sind.

5. Handwerkzeugmaschine nach Anspruch 4, **dadurch gekennzeichnet, daß** die Staubbox (221) als skelettartiger Körper ausgestaltet ist, der vom Einblasstutzen (22) getragen wird und der mit staubdicht schließenden, lösbar einsetzbaren Deckeln (523), insbesondere mit je einem Faltenfilter (48) und Luftaustrittsöffnungen (40), bestückbar ist.

6. Handwerkzeugmaschine nach Anspruch 5, **dadurch gekennzeichnet, daß** mindestens einer der Deckel (23, 523) über mindestens ein Scharnier (70, 170) mit der Staubbox (221) koppelbar ist.

7. Handwerkzeugmaschine nach Anspruch 6, **dadurch gekennzeichnet, daß** die Scharniere (70, 170) parallel zur Längsachse (35) der Staubbox (221) oder quer dazu angeordnet sind.

8. Handwerkzeugmaschine nach einem der vorhergehenden Ansprüche, **dadurch gekennzeichnet, daß** die Falten (47) des Faltenfilters (48) quer zur Längsachse der Staubbox (221) angeordnet sind.

9. Handwerkzeugmaschine nach einem der vorhergehenden Ansprüche, **dadurch gekennzeichnet, daß** die Staubbox (1021, 1121) im Inneren ein Ventil (60, 160) trägt, das den Einblasstutzen (1022, 1122) beim Lösen der Staubbox (1021, 1121) von der Handwerkzeugmaschine (10) schließt und das den Einblasstutzen (1022, 1122) öffnet, sobald ein maschinenseitiger Luftstrom das Ventil (60, 160) beaufschlagt.

10. Handwerkzeugmaschine nach Anspruch 9, **dadurch gekennzeichnet, daß** das Ventil (60) als elastische Ventilklappe ausgestaltet ist.

11. Handwerkzeugmaschine nach Anspruch 9, **dadurch gekennzeichnet, daß** das Ventil (160) als pendelnd gelagerte Klappe ausgestaltet ist.

12. Handwerkzeugmaschine nach einem der vorhergehenden Ansprüche, **dadurch gekennzeichnet, daß** einer der Deckel (623) und/oder die Seitenwände (634) der Staubbox (621) quer zur Längsachse (35) ausgerichtete Staubleitstege (625) tragen.

13. Handwerkzeugmaschine nach einem der vorhergehenden Ansprüche, **dadurch gekennzeichnet, daß** die Staubbox (21) zumindest bereichsweise, vorzugsweise an einer der Seitenwände (34), durchsichtig ist, wobei dieser Bereich zur Füllstandanzeige dient.

## Claims

1. Powered hand tool (10) having a dust extractor (19) integrated in its housing (12) and a blow-out connecting piece (20) which is arranged downstream of the dust extractor (19) and to which a dust-tight dust box (21) can be releasably fastened by means of its blow-in connection piece (22), **characterized in that** a plurality of side walls (34) of the dust box (21) have air-outlet openings (40) and carry on the inside at least one dust-tight filter element (48), in particular a folded filter, covering the air-outlet openings (40), the dust box (21) being an in particular flat box whose side walls (34) are formed by at least one releasable lid (23) which is provided with air-outlet openings (40) and carries the dust-tight filter elements (48) on its inside.

2. Powered hand tool according to Claim 1, **characterized in that** the dust box (121) carries a lid (23) on opposite respective sides, in particular the top side and underside.

3. Powered hand tool according to one of the preceding claims, **characterized in that** one lid (23) is coupled to the side walls (34) of the dust box (121) in such a way that it can be pulled out in a drawer-like manner.

4. Powered hand tool according to one of the preceding claims, **characterized in that** side walls (334) of the dust box (321) which are perpendicular to the top side merge into one another in a ring-like manner and have air-outlet openings (40) which are in particular regularly arranged and are covered on the inside by a filter element (48).

5. Powered hand tool according to Claim 4, **characterized in that** the dust box (221) is designed as a skeleton-like body which is carried by the blow-in connecting piece (22) and which can be fitted with lids (523) which close in a dust-tight manner, can be releasably inserted and in particular have one folded filter (48) each and air-outlet openings (40).

6. Powered hand tool according to Claim 5, **characterized in that** at least one of the lids (23, 523) can be coupled to the dust box (221) via at least one hinge (70, 170).

7. Powered hand tool according to Claim 6, **characterized in that** the hinges (70, 170) are arranged parallel to the longitudinal axis (35) of the dust box (221) or transversely thereto.

8. Powered hand tool according to one of the preceding claims, **characterized in that** the folds (47) of the folded filter (48) are arranged transversely to the longitudinal axis of the dust box (221).

9. Powered hand tool according to one of the preceding claims, **characterized in that** the dust box (1021, 1121), in the interior, carries a valve (60, 160) which closes the blow-in connecting piece (1022, 1122) when the dust box (1021, 1121) is released from the powered hand tool (10) and which opens the blow-in connecting piece (1022, 1122) as soon as the air flow on the machine side is admitted to the valve (60, 160).

10. Powered hand tool according to Claim 9, **characterized in that** the valve (60) is designed as an elastic valve flap.

11. Powered hand tool according to Claim 9, **characterized in that** the valve (160) is designed as a flap mounted in a pendulous manner.

12. Powered hand tool according to one of the preceding claims, **characterized in that** one of the lids (623) and/or the side walls (634) of the dust box (621) carry dust-directing webs (625) oriented transversely to the longitudinal axis (35).

13. Powered hand tool according to one of the preceding claims, **characterized in that** at least a region of the dust box (21), preferably on one of the side walls (34), is transparent, this region serving for indicating the filling.

## Revendications

1. Machine-outil à main (10) comportant une aspiration de poussière (19) intégrée dans son boîtier (12) et, en aval de l'aspiration de poussière (19), un embout d'expiration (20) auquel est fixée de façon amovible à l'aide de son embout d'insufflation (22) une boîte à poussière (21) étanche à la poussière,
**caractérisée en ce que**
plusieurs parois latérales (34) de la boîte à poussière (21) comportent des ouvertures de sortie d'air (40) et portent à l'intérieur au moins un élément filtrant (48) étanche à la poussière, en particulier un filtre à plis, qui recouvre les ouvertures de sortie d'air, la boîte à poussière (21) étant un caisson, en particulier plat, et au moins un couvercle (23) amovible muni d'ouvertures de sortie d'air (40) forme les parois latérales (34) du caisson et porte sur son côté intérieur les éléments filtrants (48) étanches à la poussière.

2. Machine-outil à main selon la revendication 1,
**caractérisée en ce que**
la boîte à poussière (121) porte un couvercle (23) sur chacun des côtés se faisant face, en particulier sur les côtés supérieur et inférieur.

3. Machine-outil à main selon l'une des revendications précédentes,
**caractérisée en ce qu'**
un couvercle (23) qu'on peut sortir comme un tiroir est couplé aux parois latérales (34) de la boîte à poussière (121).

4. Machine-outil à main selon l'une des revendications précédentes,
**caractérisée en ce que**
les parois latérales (334) de la boîte à poussière (321) perpendiculaires au côté supérieur ont une transition annulaire l'une par rapport à l'autre et comportent des ouvertures de sortie d'air (40) disposées régulièrement, recouvertes à l'intérieur par un élément filtrant (48).

5. Machine-outil à main selon la revendication 4,
**caractérisée en ce que**
la boîte à poussière (221) est un corps en forme de squelette que porte l'embout d'insufflation (22) et qui peut être équipé de couvercles (523) amovibles à fermeture étanche à la poussière dont chacun comporte un filtre à plis (48) et des ouvertures de sortie d'air (40).

6. Machine-outil à main selon la revendication 5,
**caractérisée en ce qu'**
au moins un des couvercles (23, 523) peut être couplé à la boîte à poussière (221) par l'intermédiaire d'au moins une charnière (70, 170).

7. Machine-outil à main selon la revendication 6,
**caractérisée en ce que**
les charnières (70, 170) sont parallèles ou transversales à l'axe longitudinal (35) de la boîte à poussière (221).

8. Machine-outil à main selon l'une des revendications précédentes,
**caractérisée en ce que**
les plis (47) du filtre à plis (48) sont transversaux à l'axe longitudinal (35) de la boîte à poussière (221).

9. Machine-outil à main selon l'une des revendications précédentes,
**caractérisée en ce que**
la boîte à poussière (1 021, 1 121) porte à l'intérieur une soupape (60, 160) qui ferme l'embout d'insufflation (1 022, 1 122) quand on détache de la machine-outil à main (10) la boîte à poussière (1 021, 1 121) et ouvre l'embout d'insufflation (1 022, 1 122) dès qu'un courant d'air provenant de la machine parvient à la soupape (60, 160).

10. Machine-outil à main selon la revendication 9,
**caractérisée en ce que**
la soupape (60) est conçue comme un clapet élastique de soupape.

11. Machine-outil à main selon la revendication 9,
**caractérisée en ce que**
la soupape (160) est conçue comme un clapet oscillant.

12. Machine-outil à main selon l'une des revendications précédentes,
**caractérisée en ce qu'**
un des couvercles (623) et/ou les parois latérales (634) de la boîte à poussière (621) porte des nervures de guidage de poussière (625) orientées transversalement à l'axe longitudinal (35).

13. Machine-outil à main selon l'une des revendications précédentes,
**caractérisée en ce que**
la boîte à poussière (21) est transparente au moins par endroits, de préférence sur une des parois latérales (34), cette zone servant à indiquer l'état de remplissage.
